# EUROPEAN PATENT SPECIFICATION

(11) **EP 1 212 868 B1**
(45) Date of publication and mention of the grant of the patent: **13.01.2010**
(21) Application number: 00922643.2
(22) Date of filing: 17.04.2000
(51) Int. Cl.: H04L 12/56, H04L 29/06

(54) **INTELLIGENT DATA NETWORK ROUTER**
INTELLIGENTER DATENNETZROUTER
ARCHITECTURE DE SERVICE PERFECTIONNEE CONCUE POUR LA NOUVELLE GENERATION DE RESEAU ET DE ROUTEUR DE RESEAU DE DONNEES INTELLIGENT

(30) Priority: 13.09.1999 WO PCT/EP99/06759
(43) Date of publication of application: 12.06.2002
(73) Proprietor: Nokia Corporation, 02150 Espoo (FI)
(72) Inventor: BERGENWALL, Martin, FIN-02140 Espoo (FI); SIVALINGAM, Kengatharan, Irving, TX 75063 (US); USKELA, Sami, FIN-00530 Helsinki (FI)
(74) Representative: TBK-Patent
(86) International application number: PCT/EP2000/003478
(87) International publication number: WO 2001/020856

(56) References cited:
- EP-A- 0 936 825
- WO-A-98/36542
- WO-A-99/00737
- WO-A-99/00946
- US-A- 5 745 488
- US-A- 5 781 431
- JOHNSON D: "PROVISIONING SERVICES" TELEPHONY,US,CHICAGO, IL, vol. 226, no. 22, 30 May 1994 (1994-05-30), pages 24-25, XP000606431 ISSN: 0040-2656

## Description

### FIELD OF THE INVENTION

The present invention relates to packet data transmission between mobile networks supporting Internet Protocol (IP) like the General Packet Radio Service (GPRS) network and data networks like the Internet, and in particular to a method and an apparatus for receiving and routing data packets in a data network. Moreover, the present invention relates to a method and an apparatus for receiving data packets and providing services for the received data packets in a data network.

### BACKGROUND OF THE INVENTION

Data or packet-switched networks like the Internet comprise routers for routing data packets in the data network. In a conventional router, routing of data packets is affected by a classifier for detecting incoming data packets. The conventional Internet routers comprise semi-static routing tables for routing the data packets, the routing tables being updated only via separate management procedures or via dialog between routers using special routing protocols.

However, with conventional routers several problems arise. In case of new routers propagating with conventional routing protocols, propagation of data packets in the network is slow and a dynamic update of routers is not easy, since all routers must know the handling of all packets and if the handling for one user changes all routing tables in all routers must be updated. Consequently, the routing tables of conventional routers are getting large. If every user wants his own packet handling the routing tables grow too much for the routers.

Moreover, similar problems arise with a conventional service model in a packet data environment. The conventional service model consists of a service trigger and a service logic which may be located in a router. Such model does not provide the flexibility required by the advanced services in the packet data domain.

The US-A-5 745 488 discloses a detection of the packet type of information packets received at a node in a packet based communications network. The detection is accomplished by comparing information from each received packet to a table of possible packet types. After packet type identification the corresponding packet is routed for processing based on type. A content addressable memory CAM may be utilized to store the table information and to perform the required comparisons. Each entry in the CAM table may have an associated memory address that is identified whenever an input data word matches the corresponding entry. Also associated with each of the entries in the CAM table is a data record in a RAM array, which contains cell type information corresponding to the entry. Each data record is referred to as a code point and may include information relating to the processing and priority of a received cell.

Furthermore, the WO 99/00737 A discloses a system which includes an input port process IPP that buffers the input packet received and forwards header information to the search engine. The search engine searches a database maintained on the switch element to determine the type of the packet. The type may indicate whether the packet can be routed in hardware. The search engine sends the packet type information to the IPP along with the destination address to be updated if the packet is to be routed. An output port process OPP reads a modified input packet and control field information, selectively performs additional modifications to the modified input packet and issues control signals to an output interface.

Moreover, the WO 99/00946 A is concerned with the collection of charging information relating to the usage of a packet-switched data network by a network user. In a router of the network a routing table is constructed which contains a set of destination address ranges and a set of respective next hop network nodes. To each address range in the routing table a cost class is assigned in dependence upon links/nodes, and respective cost classes are assigned through which a packet must travel to an address within the range. When a data packet is received from the network user, its destination address is defined and, on the basis of the destination address, the associated cost class is determined from the routing table, and then a corresponding cost class counter is incremented.

Finally, the US-A-5 781 431 relates to a process for analysis of information contained in a data sequence to supply routing information to a network node for routing the data sequence either across a network or to an external system for additional processing.

### SUMMARY OF THE INVENTION

It is an object of the present invention to improve routing possibilities by providing dynamically and per user configurable routing in a data network as well as a dynamic and flexible service architecture.

According to the present invention, there is provided an apparatus for receiving a plurality of data packets and for routing the data packets as defined in claim 1.

Furthermore, according to the present invention, there is provided a method for receiving a plurality of data packets and for routing the data packets in a data network as defined in claim 6.

Furthermore, there is provided a data network system in which the apparatus according to the present invention is employed.

According to the present invention, routing in accordance with instructions received on request also includes the "normal routing" possibility where a command from the external or internal entity states that no special routing is necessary, for example when only statistics and information is to be collected but no special routing is required.

According to the present invention, the original rules that indicate which packets are special packets and need special handling are stored in the storing means by the external entity.

Moreover, the rules stored in the storing means as well as the instructions stored in the internal entity can be dynamically determined and updated in real-time in response to events, which are detected by the detecting means and reported by the routing means to the external entity. Thus, the content of the storing means and the internal entity can be changed "on the fly", i.e. during active operations. The internal entity may also update, add or remove some rules.

For example, the external entity may store some rules to detect special packets. When such a packet arrives in the router the external or internal entity may modify the rules, e.g. remove the specific rule if only the first matching packet was of interest.

In routing the special data packets, the routing means is able to modify the special data packets in accordance with the received instructions. For example, the routing means can modify the content of the data packets, e.g. the packet headers, it can duplicate data packets or control dropping of data packets.

Moreover, according to the present invention, the routing means is able to communicate with an external charging entity for charging the routing of the special data packets. For example, the routing means can collect charging information from the charging entity and send charging information to the charging entity. In this way, the special handling of data packets can be charged.

For example, the detection of special packets can be based on any data within the special packet including but not limited to the source or destination IP address, TCP/UDP (Transmission Control Protocol/User Datagram Protocol) port numbers or other IP/UDP/TCP header fields. In other words, the pre-defined list of rules for detecting special packets can include such packet identification marks.

With the special packet handling according to the present invention, it is enough for the router to know that some kind of special handling is needed for special packets. In practice, this means that part of the routing tables can be located in an external entity from which the router requests instructions when needed.

Moreover, with the handling of special packets it is easy to manage scenarios that involve more than one router. For example, a tunnel can dynamically be created from one router to another through special packet handling rules and with the help of an external entity connected to both routers involved in the tunnel. Different external entities may also be connected to each other. On the other hand, one router may be connected to different external entities.

According to the present invention, more intelligence is given to a data network router, enabling implementation of more versatile and dynamic services for users.

In this context, reliable and fast delivery of high priority data packets can be guaranteed. That is, according to the present invention, the delay problem in using IP for real-time applications can be reduced or even eliminated.

Moreover, according to the present invention, a service architecture is presented, which uses techniques such as event handler interaction, trigger updating and service or user specific data updating, to control and execute services in a more dynamic way.

Thus, according to the presented service architecture, the implementation of data services with advanced features for data networks is facilitated.

In the following the present invention will be described by way of preferred embodiments thereof with reference to the accompanying drawings.

### BRIEF DESCRIPTION OF THE DRAWINGS

Fig. 1 shows a schematic block diagram of the basic components of a router according to an embodiment of the present invention;
Fig. 2 shows a flowchart of the basic steps of a method according to the embodiment of the present invention;
Fig. 3 shows a schematic block diagram of the basic components of a service architecture according to an unclaimed example; and
Fig. 4 shows a flowchart of the basic steps of a method according to the unclaimed example.

### DETAILED DESCRIPTION OF THE PREFERRED EMBODIMENTS

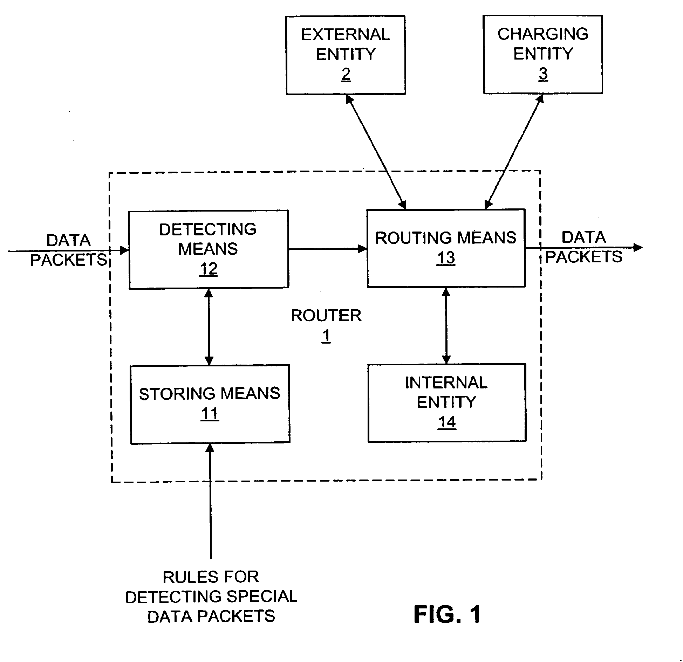

Fig. 1 shows a schematic block diagram of a router in a data network like the Internet according to an embodiment of the present invention. The router 1 comprises storing means 11, detecting means 12, routing means 13 and an internal entity 14.

The detecting means 12 receives data packets from a subscriber of a mobile network supporting Internet Protocol like the GPRS network, or data packets which are originated in the data network. In receiving the data packets, the detecting means 12 checks these packets on special packets requiring special handling by the routing means 13, by referring to a pre-defined list of rules for detecting special packets, that is stored in the storing means 11.

When the detecting means 12 detects a special packet, it informs the routing means 13 and forwards the special packet to it. Subsequently, the routing means 13 notifies the detection of a special packet to the internal entity 14 or an external entity 2, requesting instructions for handling the special packet. Having received the requested instructions, the routing means 13 handles the special data packets in accordance with these instructions, for example modifies the packet and outputs or routes it accordingly.

The routing means 13 also communicates with a charging entity 3 for providing charging for some special handling of packets. The charging entity 3 is in a way just another external entity receiving charging related events from the router 1.

The contents of the storing means 11 and the internal entity 14 can be updated dynamically in real-time by the external entity 2 in response to events detected by the detecting means 12 and reported to the external entity 2 by the routing means 13.

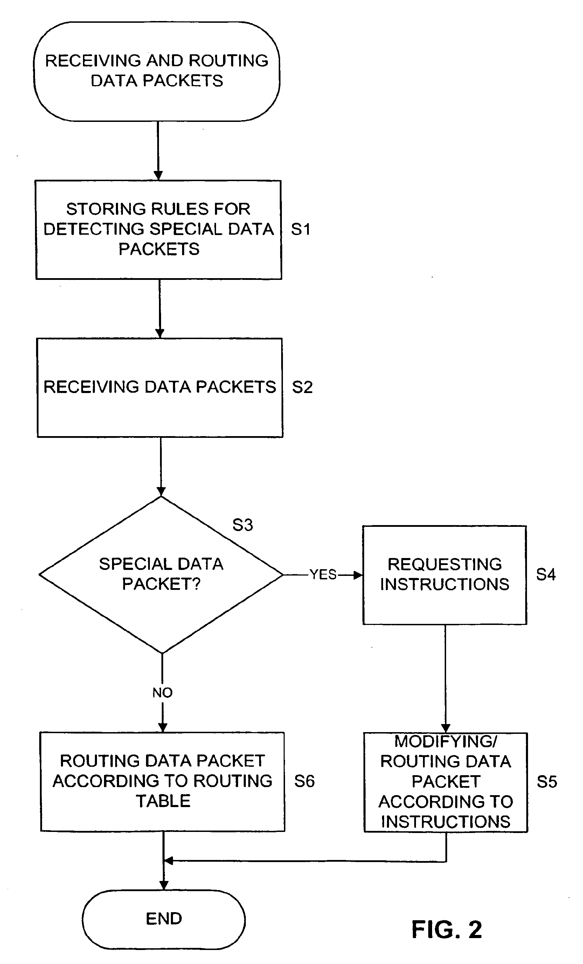

A method for receiving and routing data packets according to the embodiment of the present invention will be described with reference to Fig. 2.

In step S1 in Fig. 2, rules for detecting special data packets are stored in a list in the storing means 11. In step S2, data packets are received and it is checked in step S3, whether a received data packet is a special data packet, by referring to the stored rules. If a special data packet is detected in step S3, instructions for handling the special packet are requested in step S4. After having received the requested instructions, the special packet is handled accordingly in step S5.

On the other hand, in case no special data packet is detected in step S3, the "normal" data packet is routed according to a routing table (not shown in Fig. 1) by the routing means 13 (step S6), the routing table being provided in the router 1.

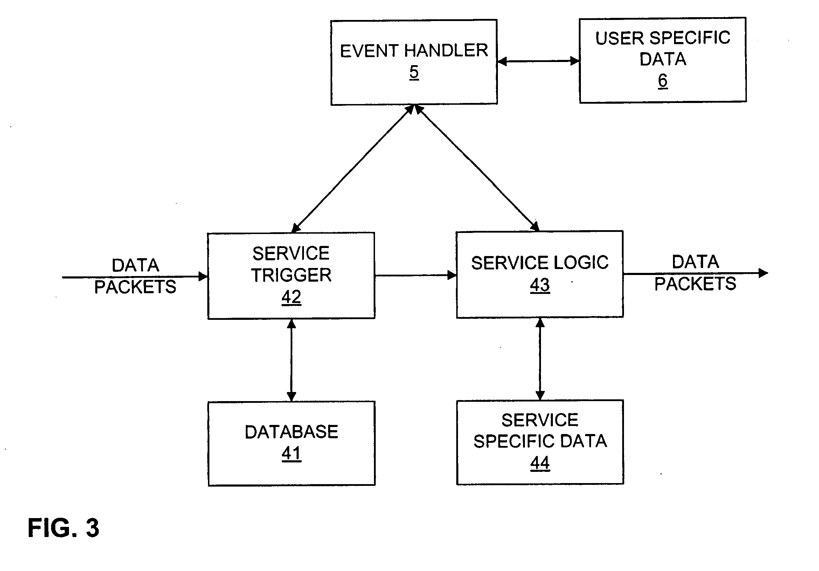

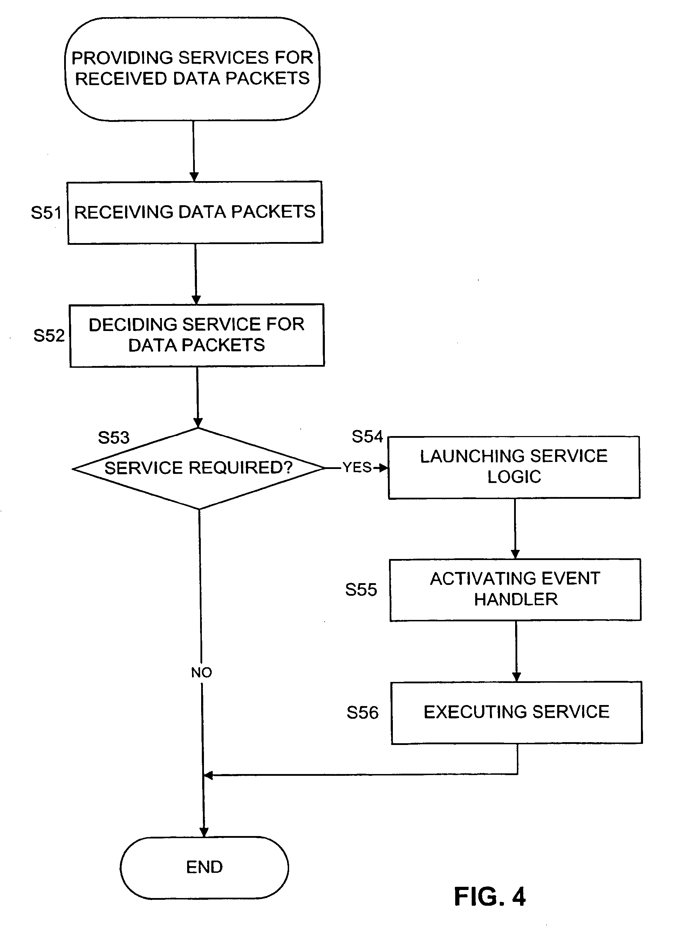

Next, an unclaimed example will be described with reference to Figs. 3 and 4.

Fig. 3 shows a service architecture which is suitable for next generation services, in particular packet data services. As shown in Fig. 3, a service trigger 42 receives data packets. The service trigger 42 then decides whether to launch a service logic 43 or not. In case the service trigger 42 launches the service logic 43, the service logic 43 executes the service decided by the service trigger 42. The service trigger 42 reads trigger information from a database 41.

When the service logic 43 is launched by the service trigger 42, a corresponding event handler 5 is also activated. The service logic 43 is able to contact the event handler during its execution. In case the service logic 43 needs user interaction, the event handler 5 is able to ask the user and pass the answer to the service logic 43. The event handler 5 can create new triggers or trigger information for the current service executed in the service logic 43, it can delete a trigger or it can activate a totally new service. In other words, new triggers or trigger information can be created "on the fly" and added to an active service by the event handler 5. In addition, the event handler 5 is able to access user specific data 6 containing user preferences regarding a specific service.

The service logic 43 accesses service specific data 44 which comprises data to run a specific service, for example destination address and tariff data for a premium rate service. The service specific data 44 is not part of the actual logic.

In an IN packet data environment, the service logic 43 may be located in a router, and the event handler may be located in an SCP (Service Control Point). For example, in case packet data is sent via an SSP (Service Switching Point) to the service trigger 42, the service trigger 42 checks whether to send a message to the SCP. If the service trigger 42 sends the message, this message is received by a dialog handler in the SCP. The dialog handler passes the message to the event handler 5 which may ask the user whether a service for the packet data, which is to be executed in the service logic 43 should be activated. The result is passed to the service logic 43. In case the user decides to activate the service, the SCP allows the SSP to continue the sending of packet data.

Fig. 4 shows a flowchart illustrating the basic steps of the method of receiving data packets and providing services for the data packets. In step S51, the service trigger 42 receives data packets, for example from an SSP. In step S52, the service trigger 42 decides whether a service is to be executed for the received data packets.

In case the service trigger 42 decides in step S53 on the basis of the trigger information in the database 41 that no service is required for the received data packets the process is terminated. In contrast thereto, in case a service is required, the process goes to step S54 where the service logic 43 is launched for the service to be executed. After that, in step S55, the event handler 5 corresponding to the service logic 43 is activated. In this context, the service trigger 42 may contact the event handler 5 as mentioned above, which may ask the user whether the decided service should be activated. In case the decided service should be activated, the service is executed by the service logic 43 in step S56, and then the process is terminated.

The data packets for which a service has been executed by the service logic 43 can be routed in accordance with this service. Hence, the above-described service architecture basically corresponds to the arrangement of the router 1 as shown in Fig. 1. In other words, the service trigger 42, the service logic 43 and the event handler 5 respectively provide similar functions as the detecting means 12, the routing means 13 and the external entity 2 according to Fig. 1.

In order to activate a service for a specific user according to the present invention it is required to get appropriate service trigger(s), service logic and event handler. The choice of the appropriate event handler may for example depend on what kind of terminal type is used by the user, e.g. GSM (Global System for Mobile communications), WAP (Wireless Application Protocol) or GPRS (General Packet Radio Service), if user interaction is required. In a group service there can also exist different event handlers with different access rights for the group members. The group owner can have a more powerful event handler than other group members, i.e. the owner's event handler can be allowed to modify the triggers for the service while others are not. A further step in activating a service is to load any service specific data that is needed statically. Dynamic service specific data is loaded by the service logic. The final step is to get the user specific data for the service.

In the following, a first application example of the present invention relating to the delay problem in using IP for real-time applications will be described.

A rule for detecting special packets may be the determination of the priority of a packet. According to the first application example, the priority of a data packet can be determined by comparing the destination number corresponding to E. 164 or the IP address of the received packet with the numbers or addresses stored in connection with the corresponding rule in the storing means 11. For example, when the destination number or IP address of the packet is listed in the corresponding rule, the packet is a special data packet having high priority. The priority of a data packet can also be detected by checking the content of the packet, e.g. the protocol header, as to whether this content is listed in the corresponding rule.

In case a special data packet, i.e. a packet having high priority such as an emergency call, is detected by the detecting means 12, the routing means 13 is informed and notifies the detection to the internal or external entity and requests instructions for handling the special data packet. Thereupon, the internal or external entity informs the routing means 13 that the delivery of the special packet is to be prioritized, which then is carried out by the routing means 13.

With this first application example of the present invention, reliable and fast delivery of high priority data packets can be guaranteed. That is, according to the present invention, the delay problem in using IP for real-time applications can be reduced or even eliminated.

Next, a second application example of the present invention relating to family or group service for data networks will be described.

The purpose of the family service is to provide a convenient method to define a user group and various properties for the group members. The service is targeted for families or small companies. The context of the service is mobile networks supporting Internet Protocol, such as GPRS.

As the use of data services gets more popular, the user group concept is a convenient way to add value to small companies or families. A group consists of a set of predefined users, recognized by SIM (Subscriber Identity Module) cards or passwords or the like. For example, the predefined users can be the members of a particular family. Each group and every member of the respective groups has properties that can be used to restrict or allow different operations. For example, parents might want to restrict the use of WAP (Wireless Application Part) services during school hours, or only allow access to pre-defined content sites. The group can have different properties for different users or a single property can be applied to all members of the group.

According to the second application example, the rule is to determine data packets belonging to members of a group. For this purpose, a list of groups and for each group a list of current members is provided in the storing means 11. In other words, in a corresponding rule in the list of rules stored in the storing means 11, group IP addresses and member IP addresses are listed.

As mentioned above, each group and each member of the group can have a set of properties. An owner like the family head paying the phone bill is defined for each group. The owner is allowed to modify the properties of the group members. A group can have multiple owners. The group member properties define the access rights for the members. Examples for properties are allowed IP addresses, allowed access times, allowed maximum access times, and the like.

According to GPRS, the above-mentioned properties can be defined in the GGSN (Gateway GPRS Support Node) representing the external entity according to Fig. 1. The GGSN is also able to supply the group IP addresses and member IP addresses to the storing means 11.

For example, when the detecting means 12 detects that a packet is to be transmitted to a group member by comparing the destination IP address of the packet with the address listed in the corresponding rule stored in the storing means 11, it informs the routing means 13 which notifies the detected packet to the GGSN and requests instructions from the GGSN for handling the detected special packet. The GGSN may determine upon this request that the special packet was originated from an unallowed IP address or at an unallowed access time or that the maximum access time has been exceeded, and instructs the routing means 13 to drop the packet.

Alternatively, packets coming from certain group members, i.e. packets having a certain source IP address, can be dropped by the routing means 13 in accordance with instructions received from the GGSN.

Hence, according to the second application example of the present invention, a censoring function is implemented in the router 1 simply by adding a rule for detecting special packets. That is, according to the present invention, the implementation of family or group services for data networks is facilitated.

While the invention has been described with reference to preferred embodiments, the description is illustrative of the invention and is not to be construed as limiting the invention. Various modifications and applications may occur to those skilled in the art without departing from the scope of the invention as defined by the appended claims.

## Claims

1. An apparatus (1) for receiving a plurality of data packets and for routing the data packets in a data network, comprising:
storing means (11) for storing a pre-defined list of rules for detecting special data packets;
detecting means (12) for detecting special data packets in the received plurality of data packets on the basis of the pre-defined list of rules stored in said storing means (11); and
routing means (13) for requesting instructions for the special data packets detected by said detecting means (12) and for routing the special data packets in accordance with instructions received on request,
**characterized by**:
an internal entity (14) for storing instructions for the special data packets,
wherein said routing means (13) is arranged to notify said internal entity (14) of the detected special data packets and request instructions for the special data packets from said internal entity (14), and
wherein an external entity (2) is arranged to determine and update the instructions stored in said internal entity (14) during active operations.

2. The apparatus according to claim 1, wherein said routing means (13) is arranged to notify the external entity (2) of the detected special data packets and request instructions for the special data packets from said external entity (2).

3. The apparatus according to claim 1, wherein said external entity is arranged to determine and update the rules stored in said storing means (11) during active operations.

4. The apparatus according to claim 1, wherein said routing means (13) is arranged to modify the special data packets in accordance with the received instructions.

5. The apparatus according to claim 1, wherein said routing means (13) is arranged to communicate with an external charging entity (3) for charging the routing of the special data packets.

6. A method for receiving a plurality of data packets and for routing the data packets in a data network, comprising the steps of:
storing (S1) a pre-defined list of rules for detecting special data packets;
detecting (S3) special data packets in the received plurality of data packets on the basis of the stored predefined list of rules; and
requesting (S4) instructions for the detected special data packets and routing (S5) the special data packets in accordance with instructions received on request,
**characterized by** the steps of:
in the requesting step, notifying an internal entity (14) of the detected special data packets and requesting instructions for the special data packets from said internal entity (14),
wherein the instructions stored in said internal entity (14) are determined and updated by an external entity (2) during active operations.

7. The method according to claim 6, wherein said requesting step (S4) comprises the steps of:
notifying said external entity (2) of the detected special data packets; and
requesting instructions for the special data packets from said external entity (2).

8. The method according to claim 6, wherein the rules stored in said storing step are determined and updated by said external entity (2) during active operations.

9. The method according to claim 6, wherein said routing step (S5) comprises the step of:
modifying the special data packets in accordance with the received instructions.

10. The method according to claim 6, comprising the further step of:
communicating with an external charging entity (3) for charging the routing of the special data packets.

11. A data network system in which an apparatus according to any one of claims 1 to 5 is employed.

## Patentansprüche

1. Vorrichtung (1) zum Empfangen einer Vielzahl von Datenpaketen und zum Verkehrslenken der Datenpakete in einem Datennetzwerk, mit:
einer Speichereinrichtung (11) zum Speichern einer vordefinierten Liste von Regeln zum Erfassen von besonderen Datenpaketen;
einer Erfassungseinrichtung (12) zum Erfassen von besonderen Datenpakten in der empfangenen Vielzahl von Datenpaketen auf der Grundlage der in der Speichereinrichtung (11) gespeicherten, vordefinierten Liste von Regeln; und
einer Verkehrslenkungseinrichtung (13) zum Anfordern von Anweisungen für die durch die Erfassungseinrichtung (12) erfassten, besonderen Datenpakete und zum Verkehrslenken der besonderen Datenpakete gemäß auf Anforderung empfangener Anweisungen;
**gekennzeichnet durch**:
eine interne Funktionseinheit (14) zum Speichern von Anweisungen für die besonderen Datenpakete,
wobei die Verkehrslenkungseinrichtung (13) eingerichtet ist, um die interne Funktionseinheit (14) bezüglich der erfassten besonderen Datenpakete zu benachrichtigen, und um Anweisungen für die besonderen Datenpakete von der internen Funktionseinheit (14) anzufordern, und
eine externe Funktionseinheit (2) eingerichtet ist, um die in der internen Funktionseinheit (14) gespeicherten Anweisungen während aktiver Betriebe zu bestimmen und zu aktualisieren.

2. Vorrichtung gemäß Anspruch 1, wobei die Verkehrslenkungseinrichtung (13) eingerichtet ist, um die externe Funktionseinheit (2) bezüglich der erfassten besonderen Datenpakete zu benachrichtigen, und um Anweisungen für die besonderen Datenpakete von der externen Funktionseinheit (2) anzufordern.

3. Vorrichtung gemäß Anspruch 1, wobei die externe Funktionseinheit eingerichtet ist, um die in der Speichereinrichtung (11) gespeicherten Regeln während aktiver Betriebe zu bestimmen und zu aktualisieren.

4. Vorrichtung gemäß Anspruch 1, wobei die Verkehrslenkungseinrichtung (13) eingerichtet ist, um die besonderen Datenpakete gemäß den empfangenen Anweisungen zu modifizieren.

5. Vorrichtung gemäß Anspruch 1, wobei die Verkehrslenkungseinrichtung (13) eingerichtet ist, um mit einer externen Abrechnungsfunktionseinheit (3) zum Abrechnen des Verkehrslenkens der besonderen Datenpakete zu kommunizieren.

6. Verfahren zum Empfangen einer Vielzahl von Datenpaketen und zum Verkehrslenken der Datenpakete in einem Datennetzwerk, mit den Schritten:
Speichern (S1) einer vordefinierten Liste von Regeln zum Erfassen von besonderen Datenpaketen;
Erfassen (S3) von besonderen Datenpakten in der empfangenen Vielzahl von Datenpaketen auf der Grundlage der gespeicherten, vordefinierten Liste von Regeln; und
Anfordern (S4) von Anweisungen für die erfassten, besonderen Datenpakete und Verkehrslenken (S5) der besonderen Datenpakete gemäß auf Anforderung empfangener Anweisungen;
**gekennzeichnet durch** die Schritte:
in dem Anforderungsschritt, Benachrichtigen einer internen Funktionseinheit (14) bezüglich der erfassten besonderen Datenpakete und Anfordern von Anweisungen für die besonderen Datenpakete von der internen Funktionseinheit (14),
wobei die in der internen Funktionseinheit (14) gespeicherten Anweisungen während aktiver Betriebe bestimmt und aktualisiert werden.

7. Verfahren gemäß Anspruch 6, wobei der Anforderungsschritt (S4) die Schritte umfasst:
Benachrichtigen der externen Funktionseinheit (2) bezüglich der erfassten besonderen Datenpakete; und
Anfordern von Anweisungen für die besonderen Datenpakete von der externen Funktionseinheit (2).

8. Verfahren gemäß Anspruch 6, wobei die in dem Speicherschritt gespeicherten Regeln durch die externe Funktionseinheit (2) während aktiver Betriebe bestimmt und aktualisiert werden.

9. Verfahren gemäß Anspruch 6, wobei der Verkehrslenkungsschritt (S5) den Schritt umfasst:
Modifizieren der besonderen Datenpakete gemäß den empfangenen Anweisungen.

10. Verfahren gemäß Anspruch 6, mit dem Schritt:
Kommunizieren mit einer externen Abrechnungsfunktionseinheit (3) zum Abrechnen des Verkehrslenkens der besonderen Datenpakete.

11. Datennetzwerksystem, in dem eine Vorrichtung gemäß zumindest einem der Ansprüche 1 bis 5 eingesetzt wird.

## Revendications

1. Dispositif (1) pour recevoir une pluralité de paquets de données et pour acheminer les paquets de données dans un réseau de données, comprenant :
des moyens de mémorisation (11) pour mémoriser une liste prédéfinie de règles pour détecter des paquets de données spéciaux ;
des moyens de détection (12) pour détecter des paquets de données spéciaux dans la pluralité reçue de paquets de données sur la base de la liste prédéfinie de règles mémorisée dans lesdits moyens de mémorisation (11) ; et
des moyens d'acheminement (13) pour demander des instructions pour les paquets de données spéciaux détectés par lesdits moyens de détection (12) et pour acheminer les paquets de données spéciaux en fonction des instructions reçues sur demande,
**caractérisé par** :
une entité interne (14) pour mémoriser des instructions pour les paquets de données spéciaux,
dans lequel lesdits moyens d'acheminement (13) sont agencés pour indiquer à ladite entité interne (14) les paquets de données spéciaux détectés et demander des instructions pour les paquets de données spéciaux à ladite entité interne (14), et
dans lequel une entité externe (2) est agencée pour déterminer et mettre à jour les instructions mémorisées dans ladite entité interne (14) pendant des opérations actives.

2. Dispositif selon la revendication 1, dans lequel lesdits moyens d'acheminement (13) sont agencés pour indiquer à l'entité externe (2) les paquets de données spéciaux détectés et demander des instructions pour les paquets de données spéciaux à ladite entité externe (2).

3. Dispositif selon la revendication 1, dans lequel ladite entité externe est agencée pour déterminer et mettre à jour les règles mémorisées dans lesdits moyens de mémorisation (11) pendant des opérations actives.

4. Dispositif selon la revendication 1, dans lequel lesdits moyens d'acheminement (13) sont agencés pour modifier les paquets de données spéciaux en fonction des instructions reçues.

5. Dispositif selon la revendication 1, dans lequel lesdits moyens d'acheminement (13) sont agencés pour communiquer avec une entité de facturation (3) externe pour facturer l'acheminement des paquets de données spéciaux.

6. Procédé pour recevoir une pluralité de paquets de données et pour acheminer les paquets de données dans un réseau de données, comprenant les étapes consistant à :
mémoriser (S1) une liste prédéfinie de règles pour détecter des paquets de données spéciaux ;
détecter (S3) des paquets de données spéciaux dans la pluralité reçue de paquets de données sur la base de la liste prédéfinie de règles mémorisée ; et
demander (S4) des instructions pour les paquets de données spéciaux détectés et acheminer (S5) les paquets de données spéciaux selon les instructions reçues sur demande,
**caractérisé par** les étapes consistant à :
à l'étape de demande, indiquer à une entité interne (14) les paquets de données spéciaux détectés et demander des instructions pour les paquets de données spéciaux à ladite entité interne (14),
dans lequel les instructions mémorisées dans ladite entité interne (14) sont déterminées et mises à jour par une entité externe (2) pendant des opérations actives.

7. Procédé selon la revendication 6, dans lequel ladite étape de demande (S4) comprend les étapes consistant à :
indiquer à ladite entité externe (2) les paquets de données spéciaux détectés ; et
demander des instructions pour les paquets de données spéciaux à ladite entité externe (2).

8. Procédé selon la revendication 6, dans lequel les règles mémorisées à ladite étape de mémorisation sont déterminées et mises à jour par ladite entité externe (2) pendant des opérations actives.

9. Procédé selon la revendication 6, dans lequel ladite étape d'acheminement (S5) comprend l'étape consistant à :
modifier les paquets de données spéciaux selon les instructions reçues.

10. Procédé selon la revendication 6, comprenant l'étape supplémentaire consistant à :
communiquer avec une entité de facturation (3) externe pour facturer l'acheminement des paquets de données spéciaux.

11. Système de réseau de données dans lequel un dispositif selon l'une quelconque des revendications 1 à 5 est utilisé.
